# FASCICULE DE BREVET EUROPEEN

(11) **EP 3 005 646 B1**
(45) Date de publication et mention de la délivrance du brevet: **24.07.2019**
(21) Numéro de dépôt: 14731745.7
(22) Date de dépôt: 28.05.2014
(51) Int. Cl.: H04L 29/06

(54) **TECHNIQUE DE DISTRIBUTION D'UN CONTENU DANS UN RÉSEAU DE DISTRIBUTION DE CONTENUS**
VERFAHREN ZUM VERTEILEN EINES INHALTSELEMENTS IN EINEM INHALTSVERTEILUNGSNETZWERK
TECHNIQUE FOR DISTRIBUTING A PIECE OF CONTENT IN A CONTENT DISTRIBUTION NETWORK

(30) Priorité: 28.05.2013 FR 1354777
(43) Date de publication de la demande: 13.04.2016
(73) Titulaire: Orange, 75015 Paris (FR)
(72) Inventeur: L'AZOU, Yves-René, F-22560 Trebeurden (FR); GAUSSEN, Benoît, F-22300 Lannion (FR); CUBAUD, Sébastien, F-35000 Rennes (FR)
(86) Numéro de dépôt international: PCT/FR2014/051259
(87) Numéro de publication internationale: WO 2014/191683

(56) Documents cités:
- WO-A1-2005/003934
- US-A1- 2010 299 525
- T Dierks et al: "The Transport Layer Security (TLS) Protocol Version 1.2", Network Working Group , 31 août 2008 (2008-08-31), XP002721348, Extrait de l'Internet: URL:tools.ietf.org/html/rfc5246 [extrait le 2014-03-06]
- A Freier et al: "The Secure Socket Layer (SSL) Protocol Version 3.0", Internet Engineering Task Force , 31 août 2011 (2011-08-31), XP002721349, Extrait de l'Internet: URL:tools.ietf.org/html/rfc6101 [extrait le 2014-03-06]

## Description

L'invention se situe dans le domaine de la distribution de contenus dans un réseau de distribution (en anglais CDN pour *Content Delivery Network*), et concerne plus particulièrement un procédé de distribution sécurisée par délégation entre réseaux de distribution de contenus, d'un contenu mis à disposition par une entité d'origine dont l'intégrité est garantie au moyen d'une clé privée.

Il est connu pour un opérateur d'utiliser les réseaux de distribution de contenus pour distribuer des contenus dans un réseau de communication. Généralement, ces réseaux comprennent des entités d'origine et des entités dépositaires de contenus répliqués, appelées entités de distribution d'un contenu par la suite. Les entités d'origine mettent à disposition des contenus qui sont dupliqués par exemple en fonction de leur popularité, sur des entités dépositaires situées près des destinataires de ces contenus. Elles permettent ainsi de ne pas solliciter les entités d'origine et de diminuer les coûts d'acheminement.

Afin de garantir l'intégrité et la provenance d'un contenu, il est également connu pour un opérateur de mettre en oeuvre dans un réseau de distribution de contenus un protocole d'échange sécurisé tel que le protocole HTTPS (*HyperText Transfer Protocol Secure*)*.* Ce dernier protocole permet de sécuriser des échanges HTTP (*HyperText Transfer Protocol*) au moyen d'une couche protocolaire SSL/TLS (*Secure Sockets Layer*/*Transport Layer Security*) de sécurisation des données échangées. La couche SSL/TLS remplit principalement trois rôles :
- authentifier les entités participant à l'échange,
- assurer la confidentialité des données échangées,
- garantir l'intégrité des données échangées.

L'authentification permet de garantir l'identité des entités participant à l'échange. Elle est réalisée au moyen de certificats délivrés par une autorité de certification, qui permettent d'attester de l'identité d'une entité auprès d'une entité tierce. Une relation de confiance peut ainsi s'établir entre l'entité pour laquelle un certificat a été délivré et l'entité tierce qui souhaite communiquer avec celle-ci.

Les protocoles SSL et TLS, et plus particulièrement la négociation SSL/TLS (*Handshake protocol*), sont décrits dans le document *Request for Comments* 6101 et 5246 de l'IETF (*Internet Engineering Task Force*). Cette négociation consiste pour deux entités souhaitant établir une communication sécurisée, à négocier des clés et des protocoles de chiffrement communs, permettant de chiffrer leurs échanges. Pour cela les deux entités, client et serveur, s'échangent d'abord un message *Hello* pour s'accorder sur les algorithmes d'authentification et de chiffrement qu'elles utiliseront. L'entité serveur envoie ensuite son certificat à l'entité cliente. Ce certificat contient des informations sur l'entité qui en est détentrice, des informations associées à l'autorité l'ayant délivré (nom de l'autorité, validité du certificat, etc.), une clé de chiffrement publique et une signature. L'entité serveur dispose d'une clé privée associée au certificat. L'entité cliente vérifie l'authenticité du certificat et l'intégrité de l'entité serveur au moyen de la clé de chiffrement publique et de la signature du certificat. L'entité cliente produit ensuite une clé de génération, dite *«premaster secret»,* qu'elle transmet à l'entité serveur, chiffrée à l'aide de la clé de chiffrement publique. L'entité serveur déchiffre la clé de génération reçue au moyen de la clé privée associée au certificat. A partir de cette clé de génération, les entités cliente et serveur génèrent une ou des clés communes de session qui permettent de sécuriser leurs échanges.

Le procédé d'établissement d'une session sécurisée tel que prévu dans les RFC 5246 et 6101 nécessite ainsi l'accès à la clé privée connue uniquement de l'entité pour laquelle a été délivré un certificat. Il est possible à une entité d'origine certifiée mettant à disposition un contenu de déléguer la distribution de celui-ci à des entités de distribution d'un réseau de distribution de contenus. Dans ce cas, le certificat de l'entité certifiée et la clé privée doivent être fournis au réseau de distribution de contenus. Ce dernier, dépositaire du contenu à distribuer, peut ainsi le distribuer de manière transparente à l'entité le requérant. Il peut être avantageux pour ce réseau de distribution de contenus mandataire de recourir lui-même à un autre réseau de distribution de contenus. Ceci permet au réseau mandataire de tirer profit de la proximité des entités de distribution d'un contenu du réseau tiers de distribution de contenus vis-à-vis des destinataires de ces contenus. Cependant dans un contexte d'échanges sécurisés, il est généralement interdit au réseau de distribution de contenus ayant obtenu mandat d'une entité certifiée de communiquer la clé privée à un tiers. Dans l'état de la technique, il est ainsi impossible à un réseau de distribution tiers dépositaire d'un contenu à distribuer, de le distribuer de manière sécurisée à une entité le requérant s'il ne dispose pas de la clé privée associée à l'entité certifiée. L'identité de l'entité certifiée et l'intégrité du contenu ne peuvent donc être garanties, avec pour effet de ne pouvoir instaurer une relation de confiance entre l'entité requérant le contenu et le réseau de distribution tiers qui en est le dépositaire.

La publication US2010/299525-A1 est nommée comme un document pertinent de l'art antérieur pour l'évaluation de l'invention.

Un des buts de l'invention est de remédier à des insuffisances/inconvénients de l'état de la technique et/ou d'y apporter des améliorations.

Selon un premier aspect, l'invention concerne un procédé de distribution dans un réseau de distribution de contenus d'un contenu, mis à disposition par une entité d'origine dont l'intégrité est garantie au moyen d'une clé privée, ledit procédé étant défini par l'objet de la revendication 1.

L'envoi d'une demande de signature permet à une entité de distribution d'un contenu de demander à une entité mandataire réputée fiable de se porter garante de son intégrité. L'entité de distribution d'un contenu étant alors reconnue comme une entité intègre, il est ainsi possible de distribuer par son intermédiaire un contenu avec une garantie sur l'entité d'origine ayant mis à disposition ce contenu. Le procédé de distribution permet ainsi à une entité non certifiée de distribuer un contenu à une entité cliente qui souhaite le recevoir avec une garantie sur son émetteur. En d'autres termes, le procédé de distribution permet d'assurer au demandeur d'un contenu que ce dernier provient d'une source intègre. Le recours à une entité mandataire tierce pour l'obtention de la signature présente également l'avantage de dispenser l'entité de distribution d'un accord préalable de distribution avec le fournisseur de contenus. La clé privée n'étant pas transmise d'une entité à une autre, la confidentialité de la clé privée associée au certificat délivré au fournisseur de contenus n'est en outre pas mise en péril. Ce confinement de la clé privée la préserve en outre d'une éventuelle utilisation frauduleuse.

Les différents modes ou caractéristiques de réalisation mentionnés ci-après peuvent être ajoutés indépendamment ou en combinaison les uns avec les autres, aux étapes du procédé de distribution tel que défini précédemment.

Selon une caractéristique particulière, le procédé de distribution comprend les étapes suivantes :
- réception dudit contenu et de ladite clé de chiffrement publique pour distribution ultérieure dudit contenu ;
- réception d'une information de traitement associée audit contenu indiquant que les traitements requérant la clé privée sont effectués par ladite entité mandataire.

L'information de traitement associée au contenu différencie les contenus requérant une distribution sécurisée des autres contenus. L'information de traitement est à titre d'exemple relative à la sensibilité du contenu à distribuer, ou encore à la réputation de l'entité à l'origine du contenu. De ce fait, elle permet notamment de choisir une politique de distribution liée à la réputation de l'entité à l'origine du contenu, ou encore qui est fonction de la sensibilité du contenu à distribuer.

Selon une autre caractéristique particulière le procédé de distribution comprend les étapes suivantes :
- réception d'une clé de génération chiffrée au moyen de ladite clé de chiffrement publique en provenance de l'entité cliente ;
- envoi de ladite clé de génération à déchiffrer à destination de ladite entité mandataire ;
- réception de ladite clé de génération déchiffrée en provenance de ladite entité mandataire ;
- génération d'au moins une clé de session à partir de ladite clé de génération, ladite au moins une clé de session étant destinée à être utilisée pour sécuriser les échanges entre ladite entité de distribution et ladite entité cliente.

Le partage d'une clé de génération entre l'équipement utilisateur et l'entité de distribution leur permet de générer une ou plusieurs clés de session communes, utilisées pour chiffrer leurs échanges. La confidentialité des échanges entre l'équipement utilisateur et l'entité de distribution est ainsi assurée. La clé de génération étant transmise chiffrée au moyen d'une clé de chiffrement publique, l'entité de distribution ne peut en outre produire des clés de session sans en avoir au préalable demandé le déchiffrement à une entité mandataire disposant de la clé privée associée à la clé de chiffrement publique. L'établissement d'une communication sécurisée ne peut donc se faire sans accréditation de l'entité de confiance. La sécurité des échanges s'en trouve renforcée. Du point de vue de l'entité cliente, le procédé permet une distribution transparente du contenu via une communication sécurisée avec l'entité de distribution. Le procédé de distribution rend invisible l'entité de distribution pour l'entité cliente, qui semble dialoguer avec l'entité à l'origine du contenu pour unique interlocuteur. Il est par ailleurs à noter que cet échange transparent est complètement indépendant du nombre d'entités de distribution intermédiaires mises en jeu dans la distribution d'un contenu entre une entité d'origine certifiée et l'entité cliente.

Selon un deuxième aspect, l'invention concerne un procédé de délégation par une entité mandataire pour distribuer un contenu à destination d'une entité cliente, l'entité mandataire disposant d'une clé privée garantissant l'intégrité d'une entité d'origine mettant à disposition le contenu, ledit procédé étant défini par l'objet de la revendication 4.

Les avantages énoncés pour le procédé de distribution d'un contenu selon le premier aspect sont directement transposables au procédé de délégation selon le deuxième aspect. La délégation permet d'utiliser des ressources de distribution qui dans l'état de la technique ne sont pas qualifiées pour distribuer le contenu. Ces ressources de distribution sont par exemple des entités non certifiées (entités auxquelles aucun certificat n'est délivré) d'un réseau de distribution de contenus tiers. Le procédé de délégation permet ainsi à un réseau de distribution de contenus de déléguer la distribution d'un contenu à un autre réseau de distribution de contenus. Le procédé de délégation permet notamment d'optimiser la distribution d'un contenu, et de contribuer à l'amélioration dans son ensemble de la qualité de service liée à la distribution d'un contenu. Une entité mandataire d'un réseau de distribution de contenus A peut par exemple tirer avantage d'une entité d'un réseau de distribution de contenus B située à proximité géographique immédiate d'une entité cliente ayant demandé un contenu, en lui déléguant la distribution du contenu.
Selon une caractéristique particulière, le procédé de délégation comprend également les étapes suivantes :
- envoi d'un contenu et d'une clé de chiffrement publique pour distribution ultérieure du contenu vers une entité cliente ;
- envoi d'une information associée audit contenu indiquant que les traitements requérant ladite clé privée sont effectués par ladite entité mandataire.
Selon une autre caractéristique particulière, le procédé de délégation comprend en outre les étapes suivantes :
- réception d'une clé de génération à déchiffrer en provenance de l'entité de distribution ;
- déchiffrement de ladite clé de génération ;
- envoi de ladite clé de génération déchiffrée à destination de ladite entité de distribution.

Selon une autre caractéristique particulière, le procédé de délégation comprend en outre un établissement d'une relation de confiance avec l'entité de distribution d'un contenu préalablement à l'envoi de ladite au moins une donnée signée.

Le lien de confiance ainsi établi permet un échange transparent vis-à-vis de l'entité cliente demandant le contenu. L'entité cliente a l'impression de dialoguer avec l'entité à l'origine du contenu. Ce lien de confiance facilite en outre le déploiement de systèmes de distribution de contenus en mesure de distribuer des contenus de manière sécurisée. Il dispense en effet de négocier des accords complexes entre opérateurs de réseaux, fournisseurs de contenus et réseaux de distribution.
Selon un troisième aspect, l'invention concerne une entité de distribution d'un contenu, dans un réseau de distribution de contenus, ledit contenu étant mis à disposition par une entité d'origine dont l'intégrité est garantie au moyen d'une clé privée, ladite entité étant défini par l'objet de la revendication 8.

Les avantages présentés pour l'une quelconque des caractéristiques particulières selon le premier aspect sont directement transposables à l'entité de distribution selon le troisième aspect. L'entité de distribution présente l'avantage de pouvoir être intégrée facilement dans un réseau de distribution de contenus existant. L'entité de distribution d'un contenu peut notamment s'intégrer dans un réseau de distribution de contenus comprenant à la fois des entités de distribution connues de l'état de la technique et des entités de distribution selon l'invention. Aucune modification lourde des infrastructures n'est requise, et le déploiement d'entités de distribution selon l'invention, au sein d'un réseau de distribution de contenus existant est aisé. Grâce à l'invention, il est donc possible d'ajouter simplement des fonctionnalités de sécurisation des échanges à un réseau de distribution de contenus existant.

Selon une caractéristique particulière, le second module d'envoi/réception de l'entité de distribution d'un contenu est également agencé pour recevoir d'une entité appartenant à un réseau de distribution de contenus, un contenu et une information de traitement dudit contenu, ainsi qu'au moins une clé de chiffrement publique.
Selon une autre caractéristique particulière, les premier module d'envoi/réception et second module d'envoi/réception de l'entité de distribution d'un contenu, sont respectivement agencés pour recevoir d'une entité cliente une clé de génération chiffrée et pour envoyer ladite clé de génération chiffrée à l'entité mandataire pour déchiffrement ;
ladite entité comprenant en outre :
- un module de calcul, agencé pour générer au moins une clé de session à partir de ladite clé de génération, ladite au moins une clé de session étant destinée à être utilisée pour sécuriser les échanges avec l'entité cliente.
Selon un quatrième aspect, l'invention concerne une entité mandataire, mémorisant une clé privée garantissant l'intégrité d'une entité d'origine mettant à disposition un contenu, ladite entité étant défini par l'objet de la revendication 11.

Selon une caractéristique particulière, le module d'envoi/réception de l'entité mandataire est également agencé pour envoyer un contenu et une information de traitement dudit contenu, ainsi qu'au moins une clé de chiffrement publique, à une entité de distribution d'un contenu.

Selon une autre caractéristique particulière, le module d'envoi/réception de l'entité mandataire est également agencé pour recevoir une clé de génération chiffrée en provenance d'une entité de distribution d'un contenu, et pour consécutivement au déchiffrement de ladite clé, la renvoyer déchiffrée à ladite entité de distribution.
Selon un cinquième aspect, l'invention propose un système dans un réseau de distribution de contenus, ledit système comprenant :
- au moins une entité de distribution d'un contenu selon le troisième aspect ;
- une entité mandataire selon le quatrième aspect.

Selon un sixième aspect, l'invention concerne également un programme pour une entité de distribution d'un contenu, comprenant des instructions de code de programme destinées à commander l'exécution des étapes du procédé de distribution précédemment décrit, lorsque ledit programme est exécuté par ladite entité et un support d'enregistrement lisible par une entité de distribution d'un contenu sur lequel est enregistré un programme pour une entité de distribution d'un contenu.

Selon un septième aspect, l'invention concerne également un programme pour une entité mandataire, comprenant des instructions de code de programme destinées à commander l'exécution des étapes du procédé de délégation précédemment décrit, lorsque ledit programme est exécuté par ladite entité et un support d'enregistrement lisible par une entité mandataire sur lequel est enregistré un programme pour une entité mandataire.

L'invention sera mieux comprise à l'aide de la description suivante de modes de réalisation particuliers, en référence aux dessins annexés sur lesquels :
- les figures 1a et 1b représentent un système pour distribuer un contenu dans un réseau de communication selon deux modes particuliers de réalisation ;
- la figure 2 représente une entité de distribution d'un contenu selon un mode particulier de réalisation ;
- le figure 3 représente une entité mandataire selon un mode particulier de réalisation ;
- les figures 4a et 4b représentent des étapes d'un procédé de distribution d'un contenu dans un mode particulier de réalisation ;
- les figures 5a et 5b représentent des étapes d'un procédé de délégation dans un mode particulier de réalisation.

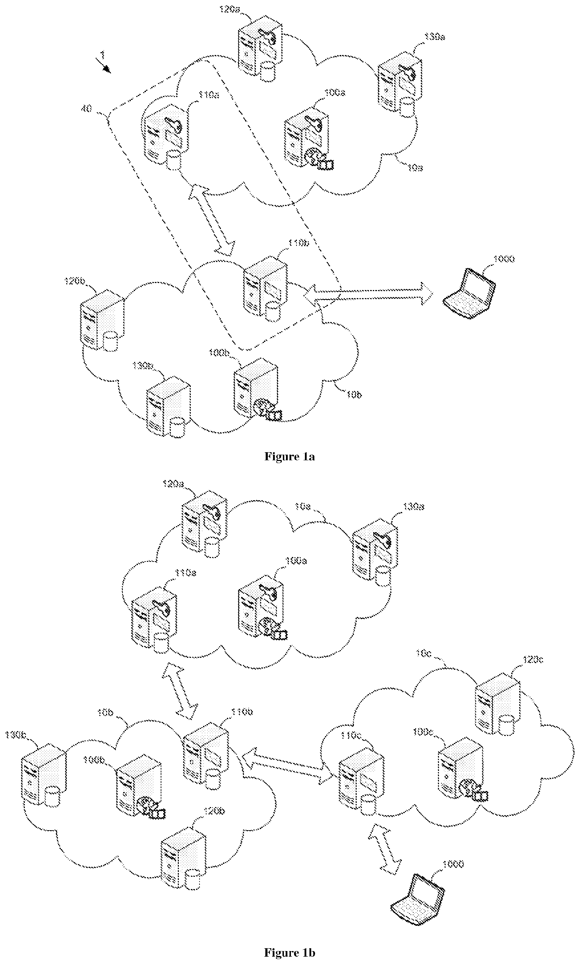

La figure la représente un système pour distribuer un contenu dans un réseau de communication 1. Tel que représenté sur la figure 1a, le réseau 1 est constitué de deux sous-réseaux de distribution de contenus 10a et 10b. Les réseaux 10a et 10b sont des réseaux de distribution de contenus. Ces réseaux comportent des entités d'origine 100a et 100b par lesquelles sont introduits les contenus à distribuer. Le réseau 10a comprend des entités de distribution d'un contenu selon l'état de la technique 120a, 130a. Le réseau 10b comprend des entités de distribution d'un contenu selon l'invention 110b et selon l'état de la technique 110b, 120b et 130b.

Les entités d'origine 100a-b sont généralement éloignées des entités clientes. Cet éloignement peut générer des coûts d'acheminement importants. Les entités de distribution 120a, 130a, 110b, 120b, 130b sont utilisées pour mettre en cache des contenus, en mémorisant au moins une partie des contenus d'un site web. Plus précisément elles permettent de mémoriser localement et temporairement des contenus demandés par une entité cliente 1000. Les entités de distribution 120a, 130a, 110b, 120b, 130b sont dédiées à cette fonction de mise en cache des contenus et sont utilisées pour répliquer des contenus entiers d'une ou plusieurs entités d'origine 100a-b. Elles permettent en particulier, en fonction du nombre d'entités de distribution déployées et de leur localisation dans le réseau de réduire les congestions réseau au niveau des entités d'origine 100a-b. Ces dernières peuvent en effet faire l'objet d'un nombre très important de sollicitations en lien direct avec la popularité des contenus qu'elles mémorisent. En outre, les entités de distribution sont généralement placées au plus près des entités clientes afin de réduire les délais d'accès au contenu recherché. Dans le présent mode de réalisation le réseau de distribution de contenus 10a s'appuie sur le réseau de distribution 10b. Comparativement aux entités de distribution 120a, 130a du réseau de distribution de contenus 10a, les entités de distribution 110b, 120b et 130b bénéficient d'une meilleure proximité géographique vis-à-vis de l'entité cliente 1000, ce qui permet d'optimiser la distribution de contenus vers l'entité cliente 1000.

Le réseau 10a détient une clé privée associée à un certificat signé par une autorité tierce, également connue sous le nom de *PKI* pour *Public Key Infrastructure.* Ce certificat est par exemple un certificat électronique conforme à la norme X.509. Chaque entité du réseau 10a dispose de la clé privée associée au certificat délivré pour le site web. Les entités du réseau 10b ne peuvent pas accéder à la clé privée, cette dernière étant confinée au réseau 10a. Le réseau de distribution 10a comprend en outre une entité mandataire 110a.

Dans le mode de réalisation décrit, une entité cliente 1000 demande à accéder à un contenu de manière sécurisée. L'entité cliente est par exemple un ordinateur personnel, un téléphone ou encore une tablette. Le contenu est par exemple une vidéo, de la musique, un fichier de données ou encore une page internet. Il est mémorisé par une entité de distribution d'un contenu 110b du réseau 10b. Pour satisfaire la demande de l'entité cliente 1000, l'entité de distribution 110b et l'entité cliente 1000 vont établir une session pour un échange sécurisé de type HTTPS. L'entité de distribution 110b, bien que disposant du contenu, n'a pas accès à la clé privée associée à l'émetteur du contenu et ne peut mettre en place un échange sécurisé. L'entité de distribution 110b demande à l'entité mandataire 110a du réseau de distribution 10a de se porter garante pour elle. L'entité de distribution 110b distribue alors sous mandat de l'entité mandataire 110a le contenu demandé à l'entité cliente 1000.

Dans un mode de réalisation particulier, une entité de distribution peut également être entité mandataire et réciproquement.

Dans un autre mode de réalisation, entité de distribution et entité mandataire font partie d'un même réseau de distribution de contenus. Auquel cas seules certaines entités d'un même réseau de distribution de contenus accèdent à une clé privée.

La figure 1b présente un autre mode de réalisation du système précédemment décrit, dans lequel la délégation se fait en cascade depuis un premier réseau de distribution 10a comportant une entité mandataire 110a, jusqu'à un second réseau de distribution 10c, en passant par un troisième réseau de distribution intermédiaire 10b. L'entité du réseau de distribution intermédiaire 10b intervenant dans la délégation est dans ce cas adaptée afin de pouvoir relayer la demande à destination de l'entité mandataire 110a de se porter garant pour l'entité de distribution 110c.

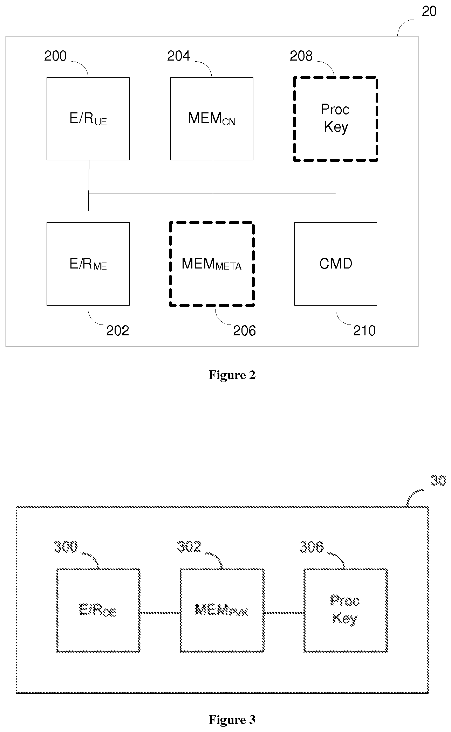

La figure 2 représente une entité de distribution d'un contenu 20 selon un mode particulier de réalisation. Elle comprend notamment :
- un premier module d'émission / réception 200, agencé pour recevoir une requête d'accès à un contenu en provenance d'une entité cliente, et envoyer à ladite entité cliente une clé de chiffrement publique, et au moins une donnée signée afin de distribuer le contenu à ladite entité cliente ;
- un second module d'envoi/réception 202, agencé pour envoyer à une entité mandataire, une demande de signature d'au moins une donnée au moyen d'une clé privée, et recevoir cette donnée signée en réponse, cette donnée signée certifiant l'intégrité de l'entité de distribution d'un contenu pour l'entité cliente ;
- des premiers moyens de mémorisation 204, agencé pour mémoriser ledit contenu ;
- des seconds moyens de mémorisation 206, agencé pour mémoriser une information de traitement du contenu et au moins une clé de chiffrement publique ;
- un module de calcul 208, agencé pour générer au moins une clé de session à partir d'une clé de génération, cette clé de session étant destinée à être utilisée pour sécuriser les échanges avec l'entité cliente ;
- un module de traitement 210, agencé pour traiter une requête d'accès au contenu.

Le premier module d'envoi/réception 200 est également agencé pour recevoir d'une entité cliente une clé de génération chiffrée au moyen d'une clé de chiffrement publique.

Le second module d'envoi/réception 202 est également agencé pour recevoir d'une entité appartenant à un réseau de distribution de contenus, un contenu et une information de traitement de ce contenu, ainsi qu'au moins une clé de chiffrement publique, et pour envoyer une clé de génération reçue chiffrée à l'entité mandataire pour déchiffrement.

Les premiers 204 et seconds 206 moyens de mémorisation sont par exemple une zone mémoire, une zone tampon (ou « buffer ») ou bien encore un disque dur externe.

Dans un autre mode de réalisation, l'entité de distribution 20 ne comporte pas de moyens de mémorisation 206. L'information de traitement indiquant que les traitements requérant la clé privée sont effectués par l'entité mandataire 30 est par exemple relayée via la demande d'accès au contenu, de l'entité cliente.

Dans un autre mode de réalisation, l'entité de distribution 20 ne comprend pas de module de calcul 208 pour générer une clé de session à partir d'une clé de génération. Dans ce cas l'entité de distribution 20 peut certifier l'intégrité de l'entité à l'origine du contenu, mais est dans l'incapacité de chiffrer les échanges avec l'entité cliente 1000.

La figure 3 représente une entité mandataire 30 selon un mode particulier de réalisation. Elle comprend notamment :
- un module d'envoi/réception 300, agencé pour recevoir en provenance d'une entité de distribution d'un contenu, une demande de signature d'au moins une donnée au moyen de la clé privée, cette demande étant relative à une distribution du contenu à destination d'une entité cliente, et pour envoyer à cette entité de distribution d'un contenu la donnée signée, la donnée signée certifiant l'intégrité de cette entité de distribution d'un contenu pour l'entité cliente et étant destinée à être envoyée à l'entité cliente ;
- des moyens de mémorisation 302, agencés pour mémoriser la clé privée ;
- un module de calcul 306, agencé pour traiter une demande de signature et une demande de déchiffrement au moyen de la clé privée.

Le module d'envoi/réception 300 est également agencé pour :
- envoyer un contenu et une information de traitement du contenu, ainsi qu'une clé de chiffrement publique,
- recevoir une clé de génération chiffrée en provenance d'une entité de distribution d'un contenu,
- suite au déchiffrement de la clé de génération, la renvoyer déchiffrée à l'entité de distribution.

Les moyens de mémorisation 302 sont par exemple une zone mémoire, une zone tampon (ou « buffer ») ou bien encore un disque dur externe.

Dans un mode particulier de réalisation, l'entité mandataire 30 n'envoie pas d'information de traitement du contenu à l'entité de distribution 20. Dans ce cas, l'entité de distribution obtient par exemple cette information depuis la demande d'accès au contenu de l'entité cliente 1000.

Dans un autre mode de réalisation, le module de calcul 306 de l'entité mandataire 30 n'est pas agencé pour traiter une demande de déchiffrement. Dans ce cas l'entité mandataire 30 fournit uniquement une garantie sur l'intégrité de l'entité à l'origine du contenu.

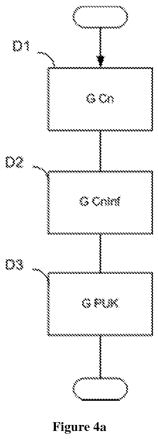

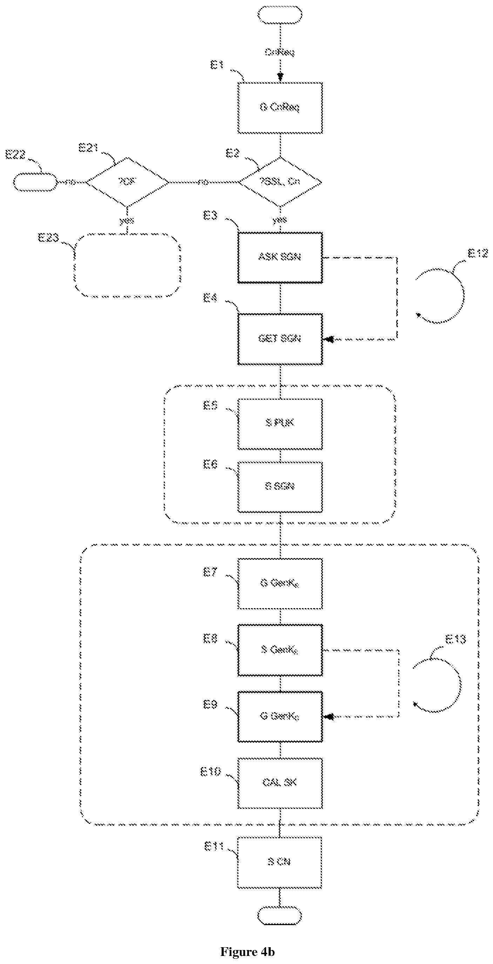

Les figure 4a et 4b décrivent les étapes du procédé de distribution d'un contenu qui sont mises en oeuvre par l'entité de distribution 20 pour distribuer un contenu de manière sécurisée à une entité cliente.

Dans une étape D1, l'entité de distribution 20 reçoit un contenu Cn en provenance d'une entité d'un réseau de distribution de contenus. Ce contenu est mémorisé par l'entité de distribution 20 afin d'être distribué ultérieurement vers une entité cliente. Le contenu Cn est par ailleurs associé à une information de traitement du contenu reçue dans une étape D2. Cette information de traitement est par exemple un booléen indiquant si le contenu Cn nécessite ou non des traitements requérant l'utilisation d'une clé privée lors de sa distribution à une entité cliente. Dans une étape D3, l'entité de distribution 20 reçoit une clé de chiffrement publique associée à cette clé privée. Ces deux clés forment une paire de clés asymétriques, l'une servant à chiffrer, et l'autre à déchiffrer des données. La clé de chiffrement publique est par exemple transmise par le biais d'un certificat électronique conforme à la norme X.509.

Il est à noter que dans un autre mode de réalisation les étapes D1, D2 et D3 sont optionnelles. Les étapes D1, D2 et D3 permettent de pré-alimenter l'entité de distribution 20 en contenus susceptibles d'être distribués vers une entité cliente.

Dans une étape E1, l'entité de distribution 20 reçoit une requête CnReq d'accès sécurisé à un contenu Cn. Dans ce mode de réalisation, la demande d'accès est en particulier une requête HTTPS.

L'entité de distribution 20 vérifie alors dans une étape E2 si une information de traitement associée au contenu est disponible. Cette information indique si le contenu requiert ou non les services d'une entité mandataire 30 afin d'être distribué de manière sécurisée.

Si le contenu n'est pas identifié comme requérant les services de l'entité mandataire 30, l'entité de distribution 20 vérifie dans une étape E21 si elle dispose localement d'une clé privée lui permettant de satisfaire la requête d'accès au contenu émise par l'entité cliente.

Si ce n'est pas le cas, le contenu ne peut être distribué en HTTPS et le procédé de distribution s'arrête dans une étape E22.

Sinon, c'est-à-dire si l'entité de distribution 20 accède localement à une clé privée lui permettant de négocier un échange sécurisé avec l'entité cliente, elle distribue le contenu à l'entité cliente dans une étape E23 selon le procédé connu de l'état de la technique détaillé dans la RFC 5246 mentionné précédemment.

Si le contenu est identifié comme requérant les services de l'entité mandataire 30, dans une étape E3, l'entité de distribution 20 envoie une demande de signature à l'entité mandataire 30. Plus précisément, l'entité de distribution 20 envoie sa demande de signature après avoir négocié avec l'entité cliente 1000 lors de l'échange d'un message *Hello,* les algorithmes et protocoles d'authentification et de chiffrement utilisés par la suite.

Lors d'une étape E4, l'entité de distribution 20 reçoit de l'entité mandataire 30 la signature demandée. Dans un mode de réalisation particulier, dans lequel l'entité de distribution 20 n'a pas préalablement reçu de certificat, par exemple lors de l'étape D3 précédemment décrite, la signature est reçue accompagnée du certificat délivré à l'entité à l'origine du contenu. Cette signature correspond plus précisément au chiffrement au moyen de la clé privée associée à l'entité à l'origine du contenu, du condensé (*hash* en anglais) d'un message obtenu à l'aide d'une fonction de « hash » (e.g. MD5 ou SHA) commune à l'entité de distribution 20 et l'entité cliente 1000, et négociée lors du message *Hello.*

Dans une étape E5, la clé de chiffrement publique associée à l'entité à l'origine du contenu est envoyée à l'entité cliente 1000 par l'entité de distribution 20.

La signature, reçue à l'étape E4, est également envoyée à l'entité cliente 1000 par l'entité de distribution 20 lors d'une étape E6. L'intégrité de l'entité de distribution 20 est alors garantie auprès de l'entité cliente.

Les étapes E1 à E6 permettent d'offrir une garantie sur l'intégrité de l'émetteur du contenu, mais elles ne permettent cependant pas d'assurer la confidentialité de l'échange. L'obtention de cette confidentialité est l'objet des étapes E7 à E10.

Lors d'une étape E7, l'entité de distribution 20 reçoit une clé de génération chiffrée depuis l'entité cliente 1000. Dans le mode de réalisation décrit, il s'agit d'une clé RSA (pour « Rivest, Shamir, Adleman »). Cette clé (connue sous le nom de *premaster secret* dans la RFC 5246) préalablement chiffrée par l'entité cliente 1000 avec la clé de chiffrement publique ne peut être déchiffrée qu'au moyen de la clé privée associée à l'entité à l'origine du contenu.

La clé de génération chiffrée reçue à l'étape E7 est alors envoyée par l'entité de distribution 20 à l'entité mandataire 30 lors d'une étape E8, afin que cette dernière la déchiffre au moyen de la clé privée.

L'entité de distribution 20 reçoit la clé de génération déchiffrée en provenance de l'entité mandataire 30 dans une étape E9.

A partir de cette clé de génération reçue de l'entité mandataire 30, l'entité de distribution 20 calcule des clés symétriques de session lors d'une étape E10, qui sont utilisées pour chiffrer les échanges qui suivent avec l'entité cliente 1000. Cette dernière a également calculé de son côté les clés symétriques de sessions. La distribution du contenu demandé peut alors se faire en toute confidentialité (étape E11).

Dans un autre mode de réalisation, l'étape E2 n'est pas mise en oeuvre, auquel cas chaque requête d'accès HTTPS à un contenu reçue de l'entité de distribution 20 est présumée nécessiter les services d'une entité mandataire 30.

Dans encore un autre mode de réalisation, les étapes E5 et E6 sont réalisées simultanément. L'envoi de la clé de chiffrement publique et de la signature se faisant par exemple par l'intermédiaire d'un certificat dit « signé », qui comporte à la fois ces deux éléments.

Il est également à noter que si l'entité de distribution 20 dispose déjà d'un certificat avec la clé publique, l'étape E5 n'est pas mise en oeuvre.

Lorsque seule une garantie d'intégrité de l'émetteur est demandée pour l'établissement d'un échange sécurisé, c'est-à-dire la confidentialité de l'échange n'est pas requise, les étapes E7 à E10 ne sont pas mises en oeuvre.

Le procédé de distribution d'un contenu peut également être adapté pour mettre en oeuvre une délégation en cascade (étape E12) comme illustré en figure 1b. Dans cette configuration, la demande de signature envoyée par l'entité de distribution 20 lors de l'étape E3 est transmise à une entité jouant le rôle d'une entité relais. La demande de signature est alors relayée d'une entité relais à une autre entité relais, jusqu'à ce que l'une d'elles soit en mesure de répondre à la demande en signant au moyen de la clé privée associée à l'entité à l'origine du contenu demandé. Dans cette variante, au niveau de l'entité de distribution 20, la réception de la signature est inchangée à l'exception du fait qu'elle est reçue par l'intermédiaire de plusieurs entités relais.
La demande de déchiffrement de la clé de génération peut de la même manière être relayée vers une entité disposant de la clé privée (étape E13).

On constate que dans ces différents modes de réalisation, l'entité de distribution ne dispose pas de la clé privée et fait appel à l'entité mandataire pour tous les traitements cryptographiques nécessitant la clé privée. Ceci permet de ne pas diffuser la clé privée. De plus, aucune modification n'est nécessaire au niveau de l'entité cliente.

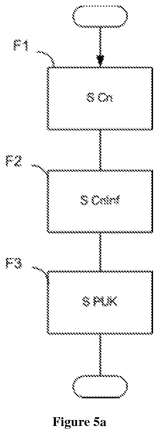

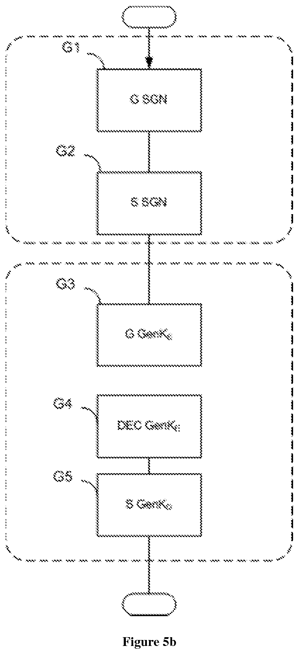

L'invention concerne également un procédé de délégation mis en oeuvre par une entité mandataire 30. Le procédé de délégation sera mieux compris à l'aide des figures 5a et 5b.

Dans une étape F1, l'entité mandataire 30 envoie un contenu Cn à une entité d'un réseau de distribution de contenus. Associé au contenu Cn une information de traitement du contenu est également envoyée dans une étape F2. Cette information de traitement identifie le contenu comme nécessitant des traitements requérant l'utilisation d'une clé privée lors de sa distribution. Dans une étape F3, l'entité mandataire 30 envoie la clé de chiffrement publique associée à sa clé privée. La clé de chiffrement publique est par exemple transmise par le biais d'un certificat électronique conforme à la norme X.509.

Il est à noter que dans un autre mode de réalisation les étapes F1, F2 et F3 sont optionnelles. Les étapes F1, F2 et F3 permettent de pré-alimenter des entités de distribution 20 en contenus susceptibles d'être distribuer vers des entités clientes avec une information indiquant si ces contenus doivent faire l'objet d'un échange sécurisé.

Dans une étape G1, l'entité mandataire 30 reçoit une demande de signature d'au moins une donnée au moyen de la clé privée associée à l'entité à l'origine du contenu Cn. La demande de signature est envoyée par exemple au moyen d'une requête HTTPS.

L'entité mandataire 30 répond alors à cette demande de signature dans une étape G2. Dans le cas où l'entité mandataire 30 n'aurait pas préalablement envoyé de certificat lors de l'étape F3 précédemment détaillée, la signature est envoyée accompagnée du certificat délivré à l'entité à l'origine du contenu. Cette signature correspond comme indiqué précédemment pour l'entité de distribution 20, au chiffrement au moyen de la clé privée associée à l'entité à l'origine du contenu, du condensé d'un message, obtenu à l'aide d'une fonction de hash négociée lors d'un message *Hello.* L'entité mandataire 30 certifie ainsi l'intégrité de l'entité de distribution.

Les étapes G3 à G5 sont plus particulièrement relatives à la confidentialité des échanges entre entités. Lors d'une étape G3, l'entité mandataire 30 reçoit une clé de génération chiffrée depuis l'entité de distribution 20. Il s'agit d'une clé RSA tel que décrite précédemment.

Cette clé de génération est ensuite déchiffrée au moyen de la clé privée dont dispose l'entité mandataire 30 (étape G4).

La clé de génération est finalement renvoyée déchiffrée à l'entité de distribution 20 dans une étape G5. Cette clé de génération est ensuite utilisée par l'entité de distribution 20 qui calcule grâce à elle des clés de sessions utilisées pour chiffrer les échanges qui s'ensuivront avec l'entité cliente 1000. La confidentialité des échanges est ainsi assurée.

Dans le cas où l'entité mandataire 30 disposerait déjà d'un certificat avec la clé publique, l'étape F3 est inutile.

En outre, lorsque seule une garantie d'intégrité de l'émetteur est demandée pour l'établissement d'un échange sécurisé, mais que la confidentialité de l'échange n'est pas requise, seules les étapes G1 à G2 sont nécessaires, les autres étapes peuvent être omises.

Dans le mode de réalisation décrit, une relation de confiance entre l'entité mandataire 30 et l'entité de distribution 20 est par ailleurs établie préalablement aux échanges de données entre ces deux entités. Les données envoyées par l'entité mandataire 30 en réponse à la demande de signature (étape G2) et à la demande de déchiffrement (étape G5) du procédé de distribution sont ainsi transmises de manière totalement sécurisée. Cette relation de confiance est par exemple une session HTTPS.

L'invention a été décrite avec une mise en oeuvre basée sur le protocole HTTPS. Il n'existe cependant pas de caractère limitatif quant aux technologies d'échanges sécurisés utilisées. L'invention peut notamment être mise en oeuvre au-dessus de tous protocoles utilisant SSL/TLS, par exemple les versions sécurisées de FTP, SMTP, POP, IMAP.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 200, 202, 208, 210 sont agencés pour mettre en oeuvre le procédé de distribution d'un contenu précédemment décrit. Il s'agit de préférence de modules logiciels comprenant des instructions logicielles pour faire exécuter les étapes du procédé de distribution précédemment décrit, mises en oeuvre par l'entité de distribution. L'invention concerne donc aussi :
- un programme pour une entité de distribution d'un contenu, comprenant des instructions de code de programme destinées à commander l'exécution des étapes du procédé de distribution d'un contenu précédemment décrit, lorsque ledit programme est exécuté par ladite entité ;
- un support d'enregistrement lisible par une entité de distribution d'un contenu sur lequel est enregistré le programme pour une entité de distribution d'un contenu.

De même les modules 300, 306sont agencés pour mettre en oeuvre le procédé de délégation précédemment décrit. Il s'agit de préférence de modules logiciels comprenant des instructions logicielles pour faire exécuter les étapes du procédé de délégation précédemment décrit, mises en oeuvre par l'entité mandataire. L'invention concerne donc aussi :
- un programme pour une entité mandataire, comprenant des instructions de code de programme destinées à commander l'exécution des étapes du procédé de délégation précédemment décrit, lorsque ledit programme est exécuté par ladite entité ;
- un support d'enregistrement lisible par une entité mandataire sur lequel est enregistré le programme pour une entité mandataire.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de distribution dans un réseau de distribution de contenus d'un contenu, mis à disposition par une entité d'origine dont l'intégrité est garantie au moyen d'une clé privée, ledit procédé comprenant les étapes suivantes mises en oeuvre par une entité de distribution (20) d'un contenu ne disposant pas de ladite clé privée :
- réception (E1) d'une requête d'accès audit contenu en provenance d'une entité cliente ;
- envoi (E3) à une entité mandataire (30) disposant de ladite clé privée, d'une demande de signature d'au moins une donnée au moyen de ladite clé privée;
- réception (E4) en provenance de l'entité mandataire de ladite au moins une donnée signée, ladite au moins une donnée signée certifiant l'intégrité de ladite entité de distribution (20) pour l'entité cliente ;
- envoi (E5) d'une clé de chiffrement publique associée à la clé privée à destination de l'entité cliente ;
- envoi (E6) de ladite au moins une donnée signée à l'entité cliente et distribution (E11) du contenu vers l'entité cliente.

2. Procédé de distribution selon la revendication 1, comprenant en outre les étapes suivantes :
- réception (D1) dudit contenu et de ladite clé de chiffrement publique (D3) pour distribution ultérieure dudit contenu ;
- réception (D2) d'une information de traitement associée audit contenu indiquant que les traitements requérant la clé privée sont effectués par ladite entité mandataire (30).

3. Procédé de distribution selon la revendication 1, comprenant en outre les étapes suivantes :
- réception (E7) d'une clé de génération chiffrée au moyen de ladite clé de chiffrement publique en provenance de l'entité cliente ;
- envoi (E8) de ladite clé de génération à déchiffrer à destination de ladite entité mandataire (30) ;
- réception (E9) de ladite clé de génération déchiffrée en provenance de ladite entité mandataire (30) ;
- génération (E10) d'au moins une clé de session à partir de ladite clé de génération, ladite au moins une clé de session étant destinée à être utilisée pour sécuriser les échanges entre ladite entité de distribution (20) et ladite entité cliente.

4. Procédé de délégation par une entité mandataire (30) pour distribuer un contenu à destination d'une entité cliente, l'entité mandataire (30) disposant d'une clé privée garantissant l'intégrité d'une entité d'origine mettant à disposition le contenu, ledit procédé comprenant les étapes suivantes mises en oeuvre par l'entité mandataire (30):
le procédé étant **caractérisé par** les étapes suivantes:
- réception (G1) en provenance d'une entité de distribution d'un contenu (20) ne détenant pas la dite clé privée d'une demande de signature d'au moins une donnée au moyen de ladite clé privée, ladite demande étant relative à une distribution du contenu à destination de l'entité cliente ;
- envoi (G2) à l'entité de distribution (20) de ladite au moins une donnée signée, ladite au moins une donnée signée certifiant l'intégrité de ladite entité de distribution d'un contenu (20) pour l'entité cliente et étant destinée à être envoyée à l'entité cliente.

5. Procédé de délégation selon la revendication 4, comprenant en outre les étapes suivantes :
- envoi d'un contenu (F1) et d'une clé de chiffrement publique (F3) pour distribution ultérieure du contenu vers une entité cliente ;
- envoi (F2) d'une information associée audit contenu indiquant que les traitements requérant ladite clé privée sont effectués par ladite entité mandataire (30).

6. Procédé de délégation selon la revendication 4, comprenant en outre les étapes suivantes :
- réception (G3) d'une clé de génération à déchiffrer en provenance de l'entité de distribution (20) ;
- déchiffrement (G4) de ladite clé de génération ;
- envoi (G5) de ladite clé de génération déchiffrée à destination de ladite entité de distribution (20).

7. Procédé de délégation selon la revendication 4, comprenant en outre un établissement d'une relation de confiance avec l'entité de distribution d'un contenu (20) préalablement à l'envoi (G2) de ladite au moins une donnée signée.

8. Entité de distribution d'un contenu (20), dans un réseau de distribution de contenus, ledit contenu étant mis à disposition par une entité d'origine dont l'intégrité est garantie au moyen d'une clé privée dont ne dispose pas l'entité de distribution, ladite entité de distribution (20) comprenant :
- un premier module d'envoi/réception (200), agencé pour recevoir une requête d'accès à un contenu en provenance d'une entité cliente, et envoyer à ladite entité cliente une clé de chiffrement publique, et au moins une donnée signée afin de distribuer le contenu à ladite entité cliente ;
- un second module d'envoi/réception (202), agencé pour envoyer à une entité mandataire (30), disposant de ladite clé privée, une demande de signature de ladite au moins une donnée au moyen de ladite clé privée, et recevoir ladite au moins une donnée signée en réponse à ladite demande, ladite au moins une donnée signée certifiant l'intégrité de ladite entité de distribution d'un contenu (20) pour l'entité cliente.

9. Entité de distribution d'un contenu (20) selon la revendication 8, dans laquelle ledit second module d'envoi/réception (202) est également agencé pour recevoir d'une entité appartenant à un réseau de distribution de contenus, un contenu et une information de traitement dudit contenu, ainsi qu'au moins une clé de chiffrement publique.

10. Entité de distribution d'un contenu (20) selon la revendication 8, dans laquelle,
ledit premier module d'envoi/réception (200) est en outre agencé pour recevoir d'une entité cliente une clé de génération chiffrée ;
ledit second module d'envoi/réception (202) est en outre agencé pour envoyer ladite clé de génération chiffrée à l'entité mandataire (30) pour déchiffrement ;
ladite entité comprenant en outre :
- un module de calcul (208), agencé pour générer au moins une clé de session à partir de ladite clé de génération, ladite au moins une clé de session étant destinée à être utilisée pour sécuriser les échanges avec l'entité cliente.

11. Entité mandataire (30), mémorisant une clé privée garantissant l'intégrité d'une entité d'origine mettant à disposition un contenu, ladite entité comprenant :
- un module d'envoi/réception (300), agencé pour recevoir en provenance d'une entité de distribution d'un contenu (20), ne détenant pas la clé privée, une demande de signature d'au moins une donnée au moyen de ladite clé privée, ladite demande étant relative à une distribution du contenu à destination d'une entité cliente, et pour envoyer à ladite entité de distribution (20), ladite au moins une donnée signée, ladite au moins une donnée signée certifiant l'intégrité de ladite entité de distribution (20) pour l'entité cliente et étant destinée à être envoyée à l'entité cliente.

12. Entité mandataire (30) selon la revendication 11, dans laquelle le module d'envoi/réception (300) est également agencé pour envoyer un contenu et une information de traitement dudit contenu, ainsi qu'au moins une clé de chiffrement publique, à une entité de distribution d'un contenu (20).

13. Entité mandataire (30) selon la revendication 12, dans laquelle le module d'envoi/réception (300) est également agencé pour recevoir une clé de génération chiffrée en provenance d'une entité de distribution d'un contenu (20), et pour consécutivement au déchiffrement de ladite clé, la renvoyer déchiffrée à ladite entité de distribution (20).

14. Système (40) dans un réseau de distribution de contenus, ledit système (40) comprenant :
- au moins une entité de distribution d'un contenu (20) selon la revendication 8 ;
- une entité mandataire (30) selon la revendication 11.

15. Programme pour une entité de distribution d'un contenu (20), comprenant des instructions de code de programme destinées à commander l'exécution des étapes du procédé selon l'une des revendications 1 à 3, lorsque ledit programme est exécuté par ladite entité.

## Patentansprüche

1. Verfahren zur Verteilung eines Inhalts in einem Verteilernetz von Inhalten, der von einer Ursprungs-Entität zur Verfügung gestellt wird, deren Integrität mittels eines privaten Schlüssels garantiert wird, wobei das Verfahren die folgenden Schritte enthält, die von einer nicht über den privaten Schlüssel verfügenden Verteiler-Entität (20) eines Inhalts durchgeführt werden:
- Empfang (E1) eines von einer Client-Entität kommenden Zugriffsantrags auf den Inhalt;
- Senden (E3) einer Anforderung einer Signatur mindestens eines Datenwerts mittels des privaten Schlüssels an eine über den privaten Schlüssel verfügende Proxy-Entität (30);
- Empfang (E4) des von der Proxy-Entität kommenden mindestens einen signierten Datenwerts, wobei der mindestens eine signierte Datenwert die Integrität der Verteiler-Entität (20) für die Client-Entität zertifiziert;
- Senden (E5) eines dem privaten Schlüssel zugeordneten öffentlichen Verschlüsselungsschlüssels an die Client-Entität;
- Senden (E6) des mindestens einen signierten Datenwerts an die Client-Entität und Verteilung (E11) des Inhalts an die Client-Entität.

2. Verteilungsverfahren nach Anspruch 1, das außerdem die folgenden Schritte enthält:
- Empfang (D1) des Inhalts und des öffentlichen Verschlüsselungsschlüssels (D3) zur späteren Verteilung des Inhalts;
- Empfang (D2) einer dem Inhalt zugeordneten Verarbeitungsinformation, die anzeigt, dass die den privaten Schlüssel erfordernden Verarbeitungen von der Proxy-Entität (30) ausgeführt werden.

3. Verteilungsverfahren nach Anspruch 1, das außerdem die folgenden Schritte enthält:
- Empfang (E7) eines von der Client-Entität kommenden, mittels des öffentlichen Verschlüsselungsschlüssels verschlüsselten Erzeugungsschlüssels;
- Senden (E8) des zu entschlüsselnden Erzeugungsschlüssels an die Proxy-Entität (30);
- Empfang (E9) des von der Proxy-Entität (30) kommenden entschlüsselten Erzeugungsschlüssels;
- Erzeugung (E10) mindestens eines Sitzungsschlüssels ausgehend vom Erzeugungsschlüssel, wobei der mindestens eine Sitzungsschlüssel dazu bestimmt ist, zur Sicherung der Austauschvorgänge zwischen der Verteiler-Entität (20) und der Client-Entität verwendet zu werden.

4. Delegierungsverfahren durch eine Proxy-Entität (30), um einen Inhalt an eine Client-Entität zu verteilen, wobei die Proxy-Entität (30) über einen privaten Schlüssel verfügt, der die Integrität einer Ursprungs-Entität garantiert, die den Inhalt zur Verfügung stellt, wobei das Verfahren die von der Proxy-Entität (30) durchgeführten folgenden Schritte enthält:
wobei das Verfahren durch die folgenden Schritte gekennzeichnet ist:
- Empfang (G1), von einer nicht über den privaten Schlüssel verfügenden Verteiler-Entität eines Inhalts (20), einer Anforderung einer Signatur mindestens eines Datenwerts mittels des privaten Schlüssels, wobei die Anforderung sich auf eine Verteilung des Inhalts an die Client-Entität bezieht;
- Senden (G2) des mindestens einen signierten Datenwerts an die Verteiler-Entität (20), wobei der mindestens eine signierte Datenwert die Integrität der Verteiler-Entität eines Inhalts (20) für die Client-Entität zertifiziert und dazu bestimmt ist, an die Client-Entität gesendet zu werden.

5. Delegierungsverfahren nach Anspruch 4, das außerdem die folgenden Schritte enthält:
- Senden eines Inhalts (F1) und eines öffentlichen Verschlüsselungsschlüssels (F3) zur späteren Verteilung des Inhalts an eine Client-Entität;
- Senden (F2) einer dem Inhalt zugeordneten Information, die anzeigt, dass die den privaten Schlüssel erfordernden Verarbeitungen von der Proxy-Entität (30) ausgeführt werden.

6. Delegierungsverfahren nach Anspruch 4, das außerdem die folgenden Schritte enthält:
- Empfang (G3) eines von der Verteiler-Entität (20) kommenden zu entschlüsselnden Erzeugungsschlüssels;
- Entschlüsselung (G4) des Erzeugungsschlüssels;
- Senden (G5) des entschlüsselten Erzeugungsschlüssels an die Verteiler-Entität (20) .

7. Delegierungsverfahren nach Anspruch 4, das außerdem einen Aufbau einer Vertrauensbeziehung mit der Verteiler-Entität eines Inhalts (20) vor dem Senden (G2) des mindestens einen signierten Datenwerts enthält.

8. Verteiler-Entität eines Inhalts (20), in einem Verteilernetz von Inhalten, wobei der Inhalt von einer Ursprungs-Entität zur Verfügung gestellt wird, deren Integrität mittels eines privaten Schlüssels garantiert wird, über den die Verteiler-Entität nicht verfügt, wobei die Verteiler-Entität (20) enthält:
- ein erstes Sende-/Empfangsmodul (200), das eingerichtet ist, um einen von einer Client-Entität kommenden Zugriffsantrag auf einen Inhalt zu empfangen und einen öffentlichen Verschlüsselungsschlüssel und mindestens einen signierten Datenwert an die Client-Entität zu senden, um den Inhalt an die Client-Entität zu verteilen;
- ein zweites Sende-/Empfangsmodul (202), das eingerichtet ist, um an eine über den privaten Schlüssel verfügende Proxy-Entität (30) eine Anforderung der Signatur des mindestens einen Datenwerts mittels des privaten Schlüssels zu senden, und den mindestens einen signierten Datenwert als Antwort auf die Anforderung zu empfangen, wobei der mindestens eine signierte Datenwert die Integrität der Verteiler-Entität eines Inhalts (20) für die Client-Entität zertifiziert.

9. Verteiler-Entität eines Inhalts (20) nach Anspruch 8, wobei das zweite Sende-/Empfangsmodul (202) ebenfalls eingerichtet ist, um von einer zu einem Verteilernetz von Inhalten gehörenden Entität einen Inhalt und eine Verarbeitungsinformation des Inhalts sowie mindestens einen öffentlichen Verschlüsselungsschlüssel zu empfangen.

10. Verteiler-Entität eines Inhalts (20) nach Anspruch 8, wobei
das erste Sende-/Empfangsmodul (200) außerdem eingerichtet ist, einen verschlüsselten Erzeugungsschlüssel von einer Client-Entität zu empfangen;
das zweite Sende-/Empfangsmodul (202) außerdem eingerichtet ist, den verschlüsselten Erzeugungsschlüssel zur Entschlüsselung an die Proxy-Entität (30) zu senden;
wobei die Entität außerdem enthält:
- ein Rechenmodul (208), das eingerichtet ist, um mindestens einen Sitzungsschlüssel ausgehend vom Erzeugungsschlüssel zu erzeugen, wobei der mindestens eine Sitzungsschlüssel dazu bestimmt ist, zur Sicherung der Austauschvorgänge mit der Client-Entität verwendet zu werden.

11. Proxy-Entität (30), die einen privaten Schlüssel speichert, der die Integrität einer Ursprungs-Entität garantiert, die einen Inhalt zur Verfügung stellt, wobei die Entität enthält:
- ein Sende-/Empfangsmodul (300), das eingerichtet ist, um von einer nicht über den privaten Schlüssel verfügenden Verteiler-Entität eines Inhalts (20) eine Anforderung der Signatur mindestens eines Datenwerts mittels des privaten Schlüssels zu empfangen, wobei die Anforderung sich auf eine Verteilung des Inhalts an eine Client-Entität bezieht, und um den mindestens einen signierten Datenwert an die Verteiler-Entität (20) zu senden, wobei der mindestens eine signierte Datenwert die Integrität der Verteiler-Entität (20) für die Client-Entität zertifiziert und dazu bestimmt ist, an die Client-Entität gesendet zu werden.

12. Proxy-Entität (30) nach Anspruch 11, wobei das Sende-/Empfangsmodul (300) ebenfalls eingerichtet ist, um einen Inhalt und eine Verarbeitungsinformation des Inhalts sowie mindestens einen öffentlichen Verschlüsselungsschlüssel an eine Verteiler-Entität eines Inhalts (20) zu senden.

13. Proxy-Entität (30) nach Anspruch 12, wobei das Sende-/Empfangsmodul (300) ebenfalls eingerichtet ist, um einen von einer Verteiler-Entität eines Inhalts (20) kommenden verschlüsselten Erzeugungsschlüssel zu empfangen, und um nach der Entschlüsselung des Schlüssels ihn entschlüsselt an die Verteiler-Entität (20) zurückzusenden.

14. System (40) in einem Verteilernetz von Inhalten, wobei das System (40) enthält:
- mindestens eine Verteiler-Entität eines Inhalts (20) nach Anspruch 8;
- eine Proxy-Entität (30) nach Anspruch 11.

15. Programm für eine Verteiler-Entität eines Inhalts (20), das Programmcodeanweisungen enthält, die dazu bestimmt sind, die Ausführung der Schritte des Verfahrens nach einem der Ansprüche 1 bis 3 zu befehlen, wenn das Programm von der Entität ausgeführt wird.

## Claims

1. Method for distributing, in a content distribution network, a content that is provided by a source entity whose integrity is guaranteed by means of a private key, said method comprising the following steps implemented by an entity for distributing a content (20) which does not have said private key:
- reception (E1) of an access request for said content from a client entity;
- sending (E3), to a proxy entity (30) which has said private key, of a request for signature of at least one datum by means of said private key;
- reception (E4), from the proxy entity, of said at least one signed datum, said at least one signed datum certifying the integrity of said distribution entity (20) for the client entity;
- sending (E5) of a public encryption key associated with the private key to the client entity;
- sending (E6) of said at least one signed datum to the client entity and distribution (E11) of the content to the client entity.

2. Method of distribution according to Claim 1, moreover comprising the following steps:
- reception (D1) of said content and of said public encryption key (D3) for subsequent distribution of said content;
- reception (D2) of a processing information item associated with said content indicating that the processing operations requiring the private key are performed by said proxy entity (30).

3. Method of distribution according to Claim 1, moreover comprising the following steps:
- reception (E7) of a generation key encrypted by means of said public encryption key from the client entity;
- sending (E8) of said generation key to be decrypted to said proxy entity (30);
- reception (E9) of said decrypted generation key from said proxy entity (30);
- generation (E10) of at least one session key from said generation key, said at least one session key being intended to be used to provide security for interchanges between said distribution entity (20) and said client entity.

4. Method for delegation by a proxy entity (30) in order to distribute a content to a client entity, the proxy entity (30) having a private key guaranteeing the integrity of a source entity providing the content, said method comprising the following steps implemented by the proxy entity (30):
the method being **characterized by** the following steps:
- reception (G1), from a distribution entity of a content (20) which does not possess said private key, of a request for signature of at least one datum by means of said private key, said request relating to distribution of the content to the client entity;
- sending (G2), to the distribution entity (20), of said at least one signed datum, said at least one signed datum certifying the integrity of said entity for distributing a content (20) for the client entity and being intended to be sent to the client entity.

5. Method for delegation according to Claim 4, moreover comprising the following steps:
- sending of a content (F1) and of a public encryption key (F3) for subsequent distribution of the content to a client entity;
- sending (F2) of an information item associated with said content indicating that the processing operations requiring said private key are performed by said proxy entity (30).

6. Method for delegation according to Claim 4, moreover comprising the following steps:
- reception (G3) of a generation key to be decrypted from the distribution entity (20);
- decryption (G4) of said generation key;
- sending (G5) of said decrypted generation key to said distribution entity (20).

7. Method for delegation according to Claim 4, moreover comprising establishment of a relationship of trust with the entity for distributing a content (20) prior to the sending (G2) of said at least one signed datum.

8. Entity for distributing a content (20), in a content distribution network, said content being provided by a source entity whose integrity is guaranteed by means of a private key which the distribution entity does not have, said distribution entity (20) comprising:
- a first sending/receiving module (200), designed to receive an access request for a content from a client entity, and to send said client entity a public encryption key, and at least one signed datum in order to distribute the content to said client entity;
- a second sending/receiving module (202), designed to send a proxy entity (30) which has said private key a request for signature of said at least one datum by means of said private key, and to receive said at least one signed datum in response to said request, said at least one signed datum certifying the integrity of said entity for distributing a content (20) for the client entity.

9. Entity for distributing a content (20) according to Claim 8, in which said second sending/receiving module (202) is likewise designed to receive, from an entity belonging to a content distribution network, a content and a processing information item for said content, as well as at least one public encryption key.

10. Entity for distributing a content (20) according to Claim 8, in which
said first sending/receiving module (200) is moreover designed to receive from a client entity an encrypted generation key;
said second sending/receiving module (202) is moreover designed to send said encrypted generation key to the proxy entity (30) for decryption;
said entity moreover comprising:
- a computation module (208), designed to generate at least one session key from said generation key, said at least one session key being intended to be used in order to provide security for interchanges with the client entity.

11. Proxy entity (30), storing in memory a private key guaranteeing the integrity of a source entity providing a content, said entity comprising:
- a sending/receiving module (300), designed to receive, from an entity for distributing a content (20) which does not possess the private key, a request for signature of at least one datum by means of said private key, said request relating to distribution of the content to a client entity, and to send said distribution entity (20) said at least one signed datum, said at least one signed datum certifying the integrity of said distribution entity (20) for the client entity and being intended to be sent to the client entity.

12. Proxy entity (30) according to Claim 11, in which the sending/receiving module (300) is likewise designed to send a content and a processing information item for said content, as well as at least one public encryption key, to an entity for distributing a content (20).

13. Proxy entity (30) according to Claim 12, in which the sending/receiving module (300) is likewise designed to receive an encrypted generation key from an entity for distributing a content (20), and, subsequent to the decryption of said key, to return it in decrypted form to said distribution entity (20).

14. System (40) in a content distribution network, said system (40) comprising:
- at least one entity for distributing a content (20) according to Claim 8;
- a proxy entity (30) according to Claim 11.

15. Program for an entity for distributing a content (20), comprising program code instructions that are intended to control the execution of the steps of the method according to one of Claims 1 to 3 when said program is executed by said entity.
